# EUROPÄISCHE PATENTANMELDUNG

(11) **EP 0 524 905 A2**
(43) Veröffentlichungstag der Anmeldung: **27.01.1993**
(21) Anmeldenummer: 92810534.5
(22) Anmeldetag: 15.07.1992
(51) Int. Cl.: B64D 17/24, B64D 17/02

(54) **Sortier- und Schutzhülle als Zubehörteil eines Gleitschirms**

(30) Priorität: 25.07.1991 CH 2228/91
(71) Anmelder: Bernhart, Michael, CH-4056 Basel (CH)
(72) Erfinder: Bernhart, Michael, CH-4056 Basel (CH)
(74) Vertreter: Hofmann, Rolf L.

(57) **Zusammenfassung**

Die Erfindung betrifft eine Sortier- und Schutzhülle (14) als Zubehörteil eines Gleitschirms, welcher ein Gleitsegel (1) aufweist, welches mit einer Mehrzahl von Aufhängeleinen (3) und Steuerleinen (7) verbunden ist, wobei ein Teil der Aufhängeleinen (3) und Steuerleinen (7) zu einem linken Tragegurt und ein anderer Teil zu einem rechten Tragegurt (5) geführt ist, zwischen welchen das Gurtzeug eines Gleitschirmpiloten einhängbar ist. Die Sortier- und Schutzhülle (14) hat die Form eines länglichen und an beiden Enden offenen Schlauches, der zur Aufnahme eines Bündels von Abschnitten einer Mehrzahl der Aufhängeleinen (3) bemessen ist und der mit einer im wesentlichen über die gesamte Länge in Längsrichtung der Hülle verlaufenden Schließeinrichtung (15) versehen ist, in deren vollständig geöffnetem Zustand die Hülle durchgehend über ihre gesamte Länge seitlich geöffnet ist.

## Beschreibung

Die Erfindung betrifft eine Sortier- und Schutzhülle als Zubehörteil eines Gleitschirms, welcher ein Gleitsegel aufweist, welches mit einer Mehrzahl von Aufhängeleinen und Steuerleinen verbunden ist, wobei ein Teil der Aufhängeleinen und Steuerleinen zu einem linken Tragegurt und ein anderer Teil zu einem rechten Tragegurt geführt ist, zwischen welchen das Gurtzeug eines Gleitschirmpiloten einhängbar ist.

Herkömmliche Gleitschirme werden meist so gestartet, daß das Gleitsegel auf eine bestimmte Weise auf dem Boden eines relativ steilen Hanges ausgebreitet wird und die Aufhänge- und Steuerleinen hangabwärts parallel zueinander gestreckt auf dem Boden des Hanges ausgelegt werden. Dabei ist besonders wichtig, daß die Leinen unmittelbar vor dem Start geordnet auf dem Hangboden ausgelegt sind, damit sich zwischen den Leinen keine Verwicklungen und Verknotungen ergeben. Damit die mit einem Steuergriff ziehbaren oder nachlassbaren Steuerleinen vom Pilot in der Startphase zuverlässig ergriffen werden können, dürfen die Steuerleinen darüberhinaus auch nicht mit den Aufhängeleinen verhängt oder verwickelt sein.

Da am Startplatz häufig längere Wartezeiten in Kauf genommen werden müssen, beispielsweise weil die Windrichtung oder Windstärke für einen Start ungünstig ist oder diesen unmöglich macht, kann es leicht zum Verwickeln oder gar Verknoten der Leinen kommen, zumal das auf dem Boden ausgebreitete Gleitsegel aufgrund seiner großen Fläche von über 20 m² leicht von Wind erfaßt wird und hochgerissen wird, wodurch die Leinen durcheinandergeworfen werden. Ein weiteres Problem ergibt sich bei relativ steilen Hängen, bei welchen das auf dem Starthang ausgebreitete Gleitsegel dazu neigt, den Hang herunterzurutschen und die Leinen zu überwerfen. Darüberhinaus muß vermieden werden, daß die Leinen im Gelände, beispielsweise an scharfkantigen Steinen, beschädigt werden.

Die Erfindung löst die Aufgabe, eine Sortier- und Schutzhülle als Zubehörteil eines Gleitschirms der eingangs erwähnten Art zu schaffen, mit deren Hilfe die Aufhängeleinen vor dem Start sortiert, geschützt, und von den Steuerleinen separiert sowie in ihrer sortierten Lage gehalten werden können.

Diese Aufgabe wird erfindungsgemäß dadurch gelöst, daß die Sortier- und Schutzhülle die Form eines länglichen und an beiden Enden offenen Schlauches hat, der zur Aufnahme eines Bündels von Abschnitten einer Mehrzahl der Aufhängeleinen bemessen ist und der mit einer im wesentlichen über die gesamte Länge in Längsrichtung der Hülle verlaufenden Schließeinrichtung versehen ist, in deren vollständig geöffnetem Zustand die Hülle durchgehend über ihre gesamte Länge seitlich geöffnet ist.

Die Sortierung der Aufhängeleinen erfolgt dadurch, daß die Hülle zunächst über ihre gesamte Länge geöffnet wird, längs einer Bahn ausgelegt wird, längs welcher die Aufhängeleinen ausgerichtet werden sollen, und der Reißverschluß nach dem Einlegen der Aufhängeleinen in die geöffnete Hülle geschlossen wird. Bei geschlossener Hülle ist ein Teilbereich der Aufhängeleinen dann umschlossen. Dabei ist vorteilhaft je eine erfindungsgemäße Sortier- und Schutzhülle für den linken Teil bzw. für den rechten Teil der Aufhängeleinen vorgesehen.

Mit der erfindungsgemäßen Sortier- und Schutzhülle lassen sich die Aufhängeleinen auf die vorgenannte Weise sehr einfach und schnell über einen gewünschten Teillängenbereich parallel zueinander in die gewünschte Richtung ausrichten. Darüberhinaus lassen sich so auf einfache Weise die Aufhängeleinen von den Steuerleinen separieren, wodurch Verwicklungen zwischen den Steuerleinen und den Aufhängeleinen verhindert werden, was insbesondere bei Rückwärtsstarts im Fall von Starkwind wichtig ist, wobei welchen die Gefahr besonders stark ist, die Steuergriffe beim Greifen danach zu verfehlen.

Ein weiterer wesentlicher Vorteil der erfindungsgemäßen Hülle ist darin zu sehen, daß die freie Länge der Aufhängeleinen stark verkürzt wird, d.h. die Länge des freien, an einem gleitsegelseitigen zweiten Ende austretenden Leinenabschnitts. Dadurch kann das auf dem Boden liegende Gleitsegel vom Wind schwerer hochgerissen werden, da dies durch die relativ kurze freie Länge der Leinen verhindert wird, die das Gleitsegel sozusagen an kurzer Leine festhalten und damit dessen Bewegung verhindern.

Als weiterer Vorteil sind die Aufhängeleinen vor Beschädigung durch scharfkantige Steine im Gelände, sowie vor Feuchtigkeit und Schmutz geschützt. Auch ein Leinenüberwurf durch Abrutschen des Gleitsegels in steilem Gelände wird verhindert.

Unmittelbar vor dem Start wird die erfindungsgemäße Sortierund Schutzhülle durch vollständiges Öffnen der Schließeinrichtung wieder seitlich von den Aufhängeleinen entfernt und beispielsweise in den Gleitschirm-Packsack gesteckt, den der Gleitschirmpilot üblicherweise beim Flug mitnimmt.

Es ist jedoch auch möglich, die Sortier- und Schutzhülle nicht seitlich zu entfernen, sondern längs der Aufhägeleinen ziehharmonikaartig zusammenzuschieben, wobei das gleitschirmseitige zweite Ende der Hülle in Richtung des Aufhängegurtes des Gleitschirmpiloten geschoben wird. Gegebenenfalls kann die Hülle dabei in eine fest an den Aufhängegurt montierte Schutztasche geschoben werden, ohne die Hülle von dem Gleitschirm zu trennen. Zum Sortieren der Aufhängeleinen wird dann das zweite Ende der Schutzhülle einfach in Richtung des Gleitsegels geschoben und unmittelbar vor dem Start in die Schutztasche zusammengeschoben.

Nach einer bevorzugten Ausgestaltung der Erfindung ist die Schließeinrichtung ein Reißverschluß. Dies hat den Vorteil, daß jeweils ein kurzer Abschnitt des Aufhängeleinenbündels von Hand sortiert werden kann, in die Hülle eingelegt werden kann und der Reißverschluß über den entsprechenden Teilbereich geschlossen werden kann. Entsprechend kann verfahren werden, wenn nach einer anderen bevorzugten Ausführungsform die Schließeinrichtung ein Klettverschluß ist. Auch andere bevorzugte Ausführungsformen wie eine Schließeinrichtung mit Druckknöpfen oder einer entsprechenden Druckleiste sind sinnvoll.

Nach einer bevorzugten Weiterbildung der Erfindung ist im geschlossenen Zustand der Hülle diese an dem gleitschirmseitigen zweiten Ende mit einem die Hülle umschließenden Klettband versehen, welches die Schließeinrichtung gegen Aufreißen sichert. Dadurch wird gesichert, daß die Schließeinrichtung nicht längs der Hülle auseinandergerissen wird, was ohne das Klettband beispielsweise durch eine Windböe passieren kann, welche die Aufhängeleinen auseinanderzutreiben sucht. Anstatt eines Klettbandes kann auch eine andere Sicherheitseinrichtung gegen Aufreißen der Hülle wie eine fest angebrachte Schnur oder ein Band mit einem Knopf oder Druckknopf angebracht sein.

Nach einer anderen bevorzugten Weiterbildung der Erfindung ist die Sortier- und Schutzhülle an einem ersten Ende mit einem Griffabschnitt versehen. Dieser kann vorzugsweise aus einem seitlich offenen Teil am aufhängegurtseitigen ersten Ende der Hülle jenseits der Schließeinrichtung bestehen. Es ist jedoch auch möglich, an der Hülle Griffschlaufen anzubringen. Mit dem Griffabschnitt soll verhindert werden, daß die gesamte Hülle beim Zuziehen derselben in Richtung des Gleitsegels verrutscht.

Vorzugsweise hat die Sortier- und Schutzhülle eine Länge von 2 bis 3 Metern. Es sind jedoch auch kürzere oder länger Abmessungen möglich. Im flachgedrückten Zustand hat die Hülle vorzugsweise eine Breite von etwa 40 mm hat. Es sind jedoch sowohl kleinere, als auch größere Abmessungen möglich, wobei besonders bei zieharmonikaartig zusammenraffbarer Sortier- und Schutzhülle breitere Hüllen bevorzugt werden, damit sich diese ohne sich mit den Aufhängeleinen zu verklemmen leicht in die für die Hülle vorgesehene Schutztasche geschoben werden können.

Für die erfindungsgemäße Sortier- und Schutzhülle sind auch andere Anwendungen als im Gleitschirmsport möglich. So kann die erfindungsgemäße Sortier- und Schutzhülle im Segelsport angewendet werden oder bei der Sortierung von Leinen bei ihrer industriellen Herstellung.

Die Erfindung wird nachfolgend anhand eines bevorzugten Ausführungsbeispiels unter Bezugnahme auf die Zeichnung erläutert. In der Zeichnung zeigen:
Fig. 1 eine schematisierte perspektivische Ansicht des Gleitschirms mit montierter Sortier- und Schutzhülle;
Fig. 2 eine separate Sortier- und Schutzhülle in geschlossenem Zustand; und
Fig. 3 eine vergrößerte perspektivische Detailansicht des Gleitschirms in schematisierter Darstellung mit montierter Sortier- und Schutzhülle.

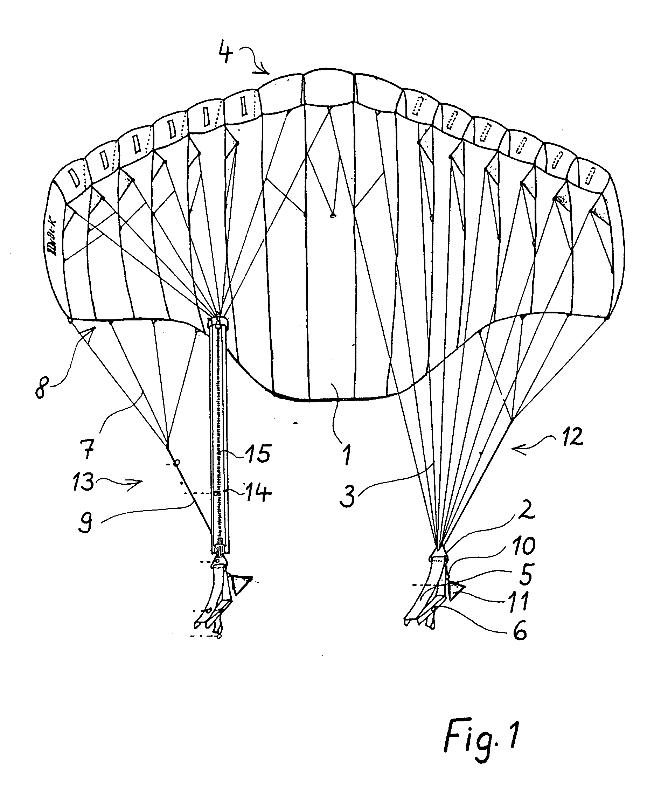

Der in Fig. 1 dargestellte Gleitschirm hat ein Gleitsegel 1, an welches ausgehend von einem Leinenschloß 2 eine Mehrzahl von Aufhängeleinen 3 geführt und im vorderen Bereich 4 des Gleitsegels 1 an diesem befestigt sind. Das Leinenschloß 2 ist mit einem Tragegurt 5 und einem Einhängegurt 6 versehen, welcher mit dem nicht dargestellten Gurtzeug des Gleitschirmpiloten verbunden werden kann.

Eine Mehrzahl von Steuerleinen 7 ist an der Hinterkante 8 des Gleitsegels 1 befestigt. Die Steuerleinen 7 sind zu einer Hauptsteuerleine 9 verbunden, die durch eine Oese 10 am Tragegurt 5 längsverschiebbar geführt ist. Hinter der Oese 10 ist die Hauptsteuerleine 9 mit einem Steuergriff 11 versehen, welcher zum Steuern des Gleitschirms gezogen oder nachgelassen werden kann. Zu diesem Zweck ist sowohl auf der in Flugrichtung linken Seite 12 des Gleitschirms und der rechten Seite 13 des Gleitschirms jeweils ein Steuergriff 11 mit einer Hauptsteuerleine 9 angebracht, wodurch die Segelhinterkante gezielt deformiert werden kann, womit sich der Anstellwinkel des Gleitsegels und damit dessen Auftrieb und Widerstand einseitig verändern läßt und so Kurven geflogen werden können.

Auch läßt sich der Anstellwinkel des Gleitsegels durch gleichzeitiges und gleichmäßiges Ziehen oder Nachlassen beider Steuergriffe 11 symmetrisch ändern, wodurch der Gleitschirm langsamer bzw. schneller geradeaus fliegt.

Vor dem Start müssen die Aufhängeleinen 3, die Hauptsteuerleine 9, und die Steuerleinen 7 sortiert auf dem Erdboden gelegt werden. Während des Startvorgangs ergreift der Pilot die Steuergriffe 11. Dabei ist sehr wichtig, daß sich die Hauptsteuerleine 9 oder die Steuerleinen 7 nicht vor dem Start am Boden mit der Aufhängeleinen 3 verwickeln oder die Aufhängeleinen sich untereinander verwickeln, da dieser Fehler nach dem Start nicht mehr zu korrigieren ist und zu einem Unfall führt. Auch ist es wichtig, daß die Steuergriffe 11 schnell und zuverlässig ergriffen werden können, was insbesondere bei einem Starkwindstart erforderlich ist, bei welchem der Pilot zunächst mit dem Rücken zur Startrichtung steht und beim Herumdrehen in der Startphase die Steuergriffe ergreifen muß. Wenn das zuverlässige Ergreifen der Steuergriffe 11 nicht möglich ist, weil sich die Hauptsteuerleine 9 bzw. der Steuergriff 11 verhängt hat, kommt es zu einem Fehlstart, der zu einem Unfall führen kann, sofern der Start nicht mehr rechtzeitig abgebrochen werden kann.

Vor dem Start werden die Aufhängeleinen 3 daher gemäß der vorliegenden Ausführungsform dadurch sortiert, daß diese auf eine seitlich vollständig geöffnete Sortier- und Schutzhülle 14 aufgebracht werden, die durch eine Schließeinrichtung 15 in Form eines Reißverschlusses geschlossen wird und in ihrem vollständig geschlossenen Zustand alle Aufhängeleinen 3 der linken Seite 12 bzw. der rechten Seite 13 umschließt. In Fig. 1 ist aus Gründen der Darstellung nur auf der rechten Seite 13 des Gleitschirms eine Sortier- und Schutzhülle 14 gezeigt, während die Aufhängeleinen 3 auf der in Flugrichtung linken Seite (in der Zeichnung auf der rechten Seite) ohne Sortierund Schutzhülle dargestellt sind.

Die Sortier- und Schutzhülle 14 kann aus Kunststoff hergestellt sein oder aus einem Kunstfasergewebe wie beispielsweise Dacron. Es ist auch möglich, die Hülle 14 aus Leinen herzustellen.

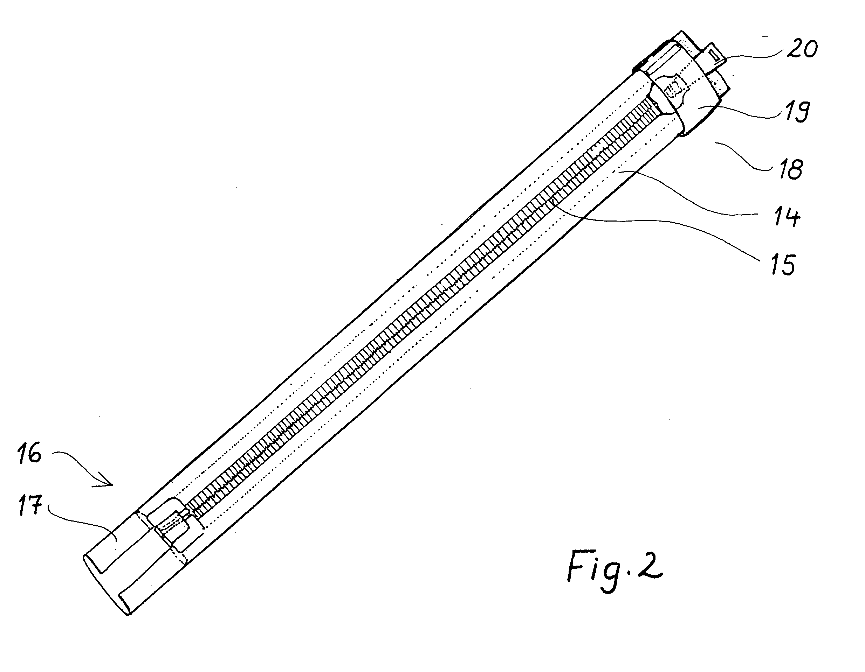

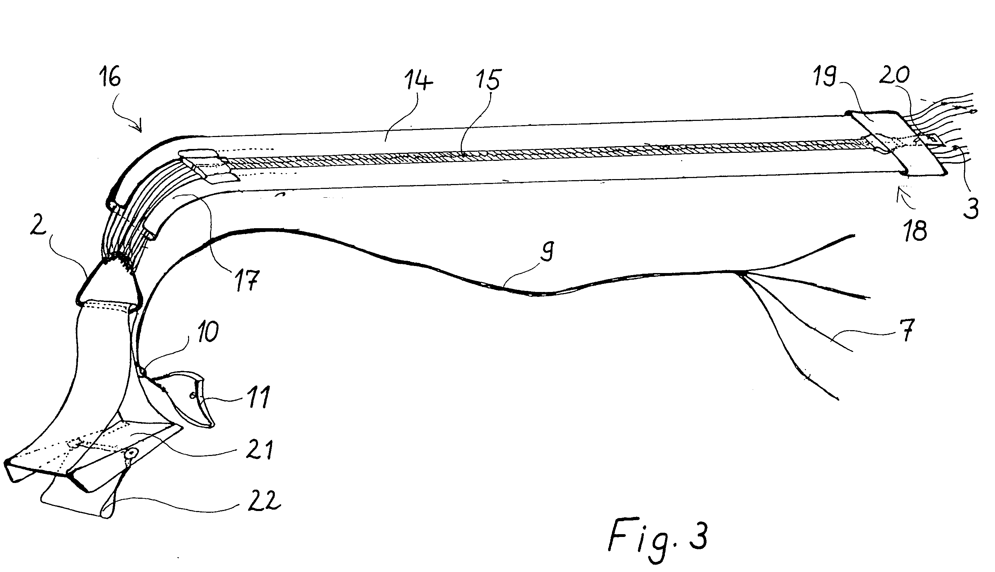

Fig. 2 zeigt die Sortier- und Schutzhülle ohne darin befindliche Aufhängeleinen in ihrem geschlossenen Zustand, während Fig. 3 die Hülle 14 in ihrem geschlossenen Zustand mit darin befindlichen Aufhängeleinen zeigt. Wie aus Fig. 2 und 3 ersichtlich ist, ist die Hülle 14 neben der Schließeinrichtung 15 in Form eines Reißverschlusses an einem ersten Ende 16 zusätzlich mit einem Griffabschnitt 17 versehen, welcher beim Schließen des Reißverschlusses von Hand festgehalten wird, damit sich die Hülle 14 durch das Zuziehen des Reißverschlusses nicht längs der Aufhängeleinen 3 verschiebt.

An einem zweiten Ende 18 der Hülle 14 ist diese von einem Klettband 19 umschlossen. Unter dem Klettband 19 ist die Grifflasche 20 des Reißverschlusses gegen die Hülle 14 angepreßt, wodurch die Grifflasche 20 eng an der Hülle 14 anliegt und nicht absteht. Das Klettband sichert die Hülle 14 gegen das Aufreißen des Reißverschlusses, was ohne die Klettbandsicherung leicht passieren könnte, wenn beispielsweise Wind unter das Gleitsegel greift und die Aufhängeleinen spreizt.

Wie schon zuvor erwähnt, zeigt Fig. 3 die Sortier- und Schutzhülle 14 in ihrem geschlossenen Zustand mit darin befindlichen Aufhängeleinen 3. Die Aufhängeleinen 3 treten ausgehend von dem Leinenschloß 2 in das erste Ende 16 der Hülle 14 ein und durchlaufen den Griffabschnitt 17, den sich über den größten Teil der Hüllenlänge erstreckenden Schließabschnitt mit dem Reißverschluß und treten durch das zweite Ende 18 mit der Sicherung gegen Aufreißen durch das Klettband 19 zum Gleitsegel 1 hin aus.

Wie auch aus Fig. 3 ersichtlich ist, liegen die Hauptsteuerleine 9 und die Steuerleinen 7 außerhalb der Hülle 14, damit keine Verwicklung oder Verknotung mit den Aufhängeleinen 3 eintreten kann. Wie schon erwähnt, ist die Hauptsteuerleine 9 durch die an dem Tragegurt 5 befestigte Oese 10 zu dem Steuergriff 11 geführt. An den Tragegurt 5 schließt sich die Wippe 21 und schließlich der Einhängegurt 22 an, an dem das nicht dargestellte Gurtzeug des Gleitschirmpiloten befestigt ist.

Durch die Hülle wird erreicht, daß die Aufhängeleinen 3 leicht durch Einlegen in die Hülle 14 und Zuziehen des Reißverschlusses sortiert werden können und vor dem Start in ihrer sortierten und gleich ausgerichteten Lage gehalten werden, wobei ein Verwickeln der Aufhängeleinen 3 untereinander oder mit den Steuerleinen 9, 7 verhindert wird. Darüberhinaus ist die freie Länge der Aufhängeleinen 3 stark verkürzt, wodurch das Gleitsegel besser auf dem Boden liegen bleibt und nicht aufgrund von Windböen hochgerissen wird. Weiter stellt die Hülle 14 einen Schutz gegen Beschädigung der Aufhängeleinen 3 auf dem Erdboden, gegen Verschmutzung und gegen Feuchtigkeitseinfluß dar.

Unmittelbar vor dem Start wird die Sortier- und Schutzhülle 14 entfernt und der Gleitschirm 1 ist startklar. Die linke und rechte Sortier- und Schutzhülle 14 kann in den leeren Packsack des Gleitschirms gepackt werden.

## Patentansprüche

1. Sortier- und Schutzhülle als Zubehörteil eines Gleitschirms, welcher ein Gleitsegel aufweist, welches mit einer Mehrzahl von Aufhängeleinen und Steuerleinen verbunden ist, wobei ein Teil der Aufhängeleinen und Steuerleinen zu einem linken Tragegurt und ein anderer Teil zu einem rechten Tragegurt geführt ist, zwischen welchen das Gurtzeug eines Gleitschirmpiloten einhängbar ist, dadurch gekennzeichnet, daß die Sortier- und Schutzhülle (14) die Form eines länglichen und an beiden Enden offenen Schlauches hat, der zur Aufnahme eines Bündels von Abschnitten einer Mehrzahl der Aufhängeleinen (3) bemessen ist und der mit einer im wesentlichen über die gesamte Länge in Längsrichtung der Hülle (14) verlaufenden Schließeinrichtung (15) versehen ist, in deren vollständig geöffnetem Zustand die Hülle (14) durchgehend über ihre gesamte Länge seitlich geöffnet ist.

2. Sortier- und Schutzhülle nach Patentanspruch 1, dadurch gekennzeichnet, daß die Schließeinrichtung (15) ein Reißverschluß ist.

3. Sortier- und Schutzhülle nach Patentanspruch 1, dadurch gekennzeichnet, daß die Schließeinrichtung (15) ein Klettverschluß ist.

4. Sortier- und Schutzhülle nach Patentanspruch 1, dadurch gekennzeichnet, daß die Schließeinrichtung (15) Druckknöpfe aufweist.

5. Sortier- und Schutzhülle nach einem der vorangehenden Patentansprüche, dadurch gekennzeichnet, daß im geschlossenen Zustand der Hülle (14) diese an einem gleitschirmseitigen zweiten Ende (18) mit einem die Hülle (14) umschließenden Klettband (19) versehen ist, welches die Schließeinrichtung (15) gegen Aufreißen sichert.

6. Sortier- und Schutzhülle nach einem der vorangehenden Patentansprüche, dadurch gekennzeichnet, daß die Sortier- und Schutzhülle (14) an einem ersten Ende (16) mit einem Griffabschnitt (17) versehen ist.

7. Sortier- und Schutzhülle nach einem der vorangehenden Patentansprüche, dadurch gekennzeichnet, daß die Sortier- und Schutzhülle (14) eine Länge von 2 bis 3 Metern hat.

8. Sortier- und Schutzhülle nach einem der vorangehenden Patentansprüche, dadurch gekennzeichnet, daß die Sortier- und Schutzhülle (14) im flachgedrückten Zustand eine Breite von etwa 40 mm hat.
